# EUROPEAN PATENT SPECIFICATION

(11) **EP 2 906 354 B1**
(45) Date of publication and mention of the grant of the patent: **22.11.2017**
(21) Application number: 13844871.7
(22) Date of filing: 10.10.2013
(51) Int. Cl.: B05B 7/00, B01J 2/00, B01J 2/16, B01J 2/18

(54) **FLUIDIZED BED COATING APPARATUS**
WIRBELBETT-BESCHICHTUNGSVORRICHTUNG
APPAREIL DE REVÊTEMENT À LIT FLUIDISÉ

(30) Priority: 12.10.2012 US 201261713305 P
(43) Date of publication of application: 19.08.2015
(73) Proprietor: Spraying Systems Co., Wheaton, IL 60187-7901 (US)
(72) Inventor: FILICICCHIA, Daniel, Londonderry, New Hampshire 03053 (US); HUFFMAN, David, Merrimack, New Hampshire 03054 (US); SMITH, Brian, Rochelle, Illinois 61068 (US); SZCZAP, Joseph, Naperville, Illinois 60565 (US)
(74) Representative: Makovski, Priscilla Mary
(86) International application number: PCT/US2013/064200
(87) International publication number: WO 2014/059063

(56) References cited:
- WO-A1-2009/039424
- US-A- 3 694 675
- US-A1- 2006 130 748
- US-A1- 2008 000 419
- US-A1- 2008 200 331
- US-A1- 2010 258 648
- US-B1- 6 685 775

## Description

### FIELD OF THE INVENTION

The present invention relates generally to fluidized bed coating systems, and more particularly, to a coating system in which an atomized coating liquid is directed upwardly into a coating chamber within which particles to be coated are circulated between upbed and downbed regions by upwardly directed airflow streams.

### BACKGROUND OF THE INVENTION

Fluidized bed coating systems are known in which particles to be coated are circulated by an upwardly directed airstream through an upbed of particulate material to be coated and downwardly through an annular surrounding outbed of particulate material. Atomized coating liquid is directed centrally into the upbed for coating the particles as they travel upwardly. Airflow is generated within the coating chamber by drawing air through an upper filtering apparatus which blocks the passage of coated particulate.

It is important in such fluidized bed coating systems that the coating fluid be atomized into as small of particles as possible to facilitate efficient coating without undesirable agglomeration of liquid onto the particles to be coated. For this purpose, it is known to utilize pressurized air assisted atomizing liquid spray nozzles which facilitate fine coating liquid particle breakdown.

A problem with such fluidized bed coating systems is that the energy of the pressurized air utilized in atomizing the coating fluid tends to propel the coating particles upward past the particulate matter to be coated such as to prevent effective and efficient coating. The energy of the pressurized air further tends to propel the coated particulate into the filter system at the upper end of the coating chamber, causing clogging, operating inefficiency, and the necessity for frequent cleaning. Lowering the pressure of the atomizing air to minimize such problems, on the other end, results in ineffective atomization and liquid particle breakdown necessary for optimum coating.
US2006130748 discloses a coater including a separator screen located within a Wurster tube in surrounding relationship to the spray nozzle and forming an annular volume through which at least a portion of smaller feed material particles are permitted to preferentially enter the spray pattern before the larger-sized particles can do so, thereby causing the smaller particles to become agglomerated first, resulting in finished product having a more even distribution of particle sizes.

WO2009/039424 discloses a spray nozzle assembly that utilizes ultrasonic atomization techniques to atomize a liquid into a cloud of small or fine droplets is disclosed. The nozzle assembly also can use various air or gas atomizing technologies to propel the generally directionless droplet cloud toward a surface or substrate to be coated. The propelled droplet cloud may have a conical or cone-shaped spray pattern. Additional air or gas atomizing technologies can be utilized to shape the propelled droplet cloud into a flattened fan-shaped spray pattern that can be usable in various industrial applications. The shape of the spray pattern and the distribution of droplets within the pattern can be adjusted by manipulation of the gas pressure used in gas atomization.

US6685775 discloses a Wurster which includes an air diverter which supplies a flow of air in a radial direction adjacent the spray nozzle body and spray nozzle, so as to force the product away from the nozzle during the spraying process. The air diverter includes a sleeve with air passages therein, a manifold connected to the sleeve and to a source of secondary pressurized air or gas, and a collar to mount the assembled air diverter onto the perforated plate of the Wurster apparatus. In operation, the air diverter allows the spray pattern from the nozzle to more fully develop, allows more complete atomization of the spray solution, and allows for higher spray rates with little or no agglomeration of the product.

### OBJECTS AND SUMMARY OF THE INVENTION

It is an object of the invention to provide a fluidized bed coating system adapted for more efficiently and effectively coating particulate matter with finely atomized coating fluid.

Another object of a fluidized bed coating system as characterized above in which a coating fluid is atomized and discharged into the coating chamber in a manner that facilitates more complete interaction and coating of the particulate matter.

A further object to provide a fluidized bed coating system of the foregoing type which is operable for atomizing the coating fluid into finer liquid particles and for controlling the discharging coating particles for optimum interaction with particulate matter in an upbed section of the coating apparatus.

Still another object to provide such a fluidized bed coating system in which the fluidized bed airflow streams circulate the particulate matter in the coating chamber with lesser tendency for clogging of the filter system.

The present invention is a fluidized bed coating apparatus according to claim 1

Other objects and advantages of the invention will be apparent upon reading the following detailed description and upon reference to the drawings.

### BRIEF DESCRIPTION OF THE DRAWINGS

Figure 1 is a vertical section of an illustrative fluidized bed coating system in accordance with the invention;
Fig. 2 also is a vertical section of the illustrated fluidized bed coating system, taken in a plane ninety degrees offset from that of figure 1;
Fig. 3 is an enlarged plane view of the air control orifice disc of the illustrated coating system;
Fig. 4 is an enlarged fragmentary section of a discharge end of the ultrasonic nozzle of the illustrated system;
Fig. 5 is an enlarged vertical section of the ultrasonic spray nozzle of the illustrated system
Fig. 6 is a transverse section of the illustrated spray nozzle taken in the plane of line 6-6 in Fig. 5;
Fig. 7 is a vertical section of the illustrated ultrasonic spray nozzle, taken in a plane ninety degrees offset from the vertical section of Fig. 5; and
Fig. 8 is an enlarged fragmentary section of a discharge end of the illustrated spray nozzle.

While the invention is susceptible of various modifications and alternative constructions, a certain illustrative embodiment thereof has been shown in the drawings and will be described below in detail.

### DETAILED DESCRIPTION OF PREFERED EMBODIMENT

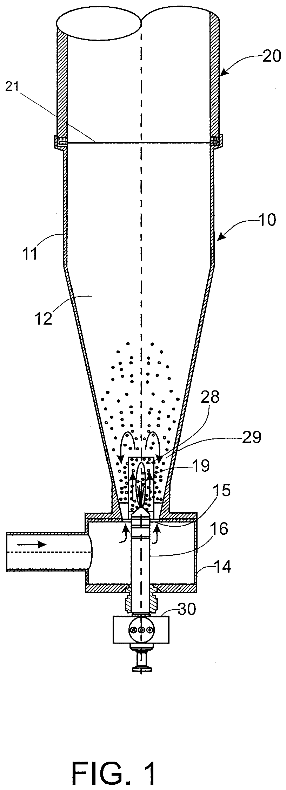

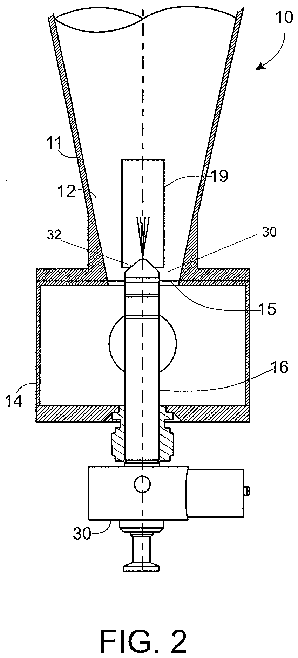

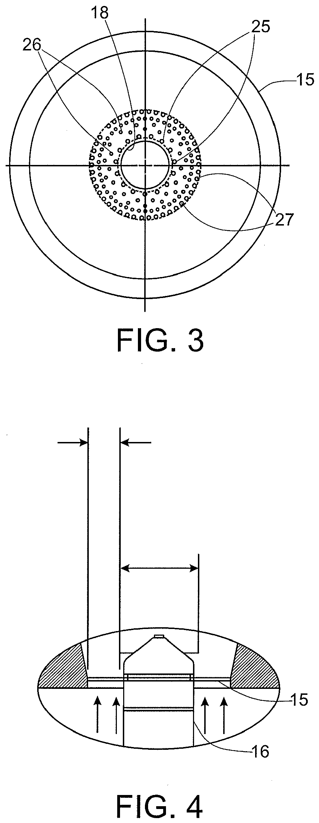

Referring now more particularly to figures 1 - 4 of the drawings, there is shown an illustrative fluidized bed coating apparatus 10 in accordance with the invention. The illustrated apparatus 10 is of a type commonly referred to in the industry as a Wurster bottom spray coating machine. The illustrated coating apparatus 10 basically comprises a fluid bed bowl or vessel 11 which defines an upwardly expanding, conical coating chamber 12, a lower air inlet plenum 14 for communicating process air to the coating chamber 12, an orifice plate 15 between the air inlet plenum 14 and coating chamber 12, a central liquid spray nozzle 16 projecting upwardly through a central opening 18 (Fig. 3) in the orifice plate 15, and a cylindrical separator 19 disposed in upstanding surrounding relation to a discharge end of the spray nozzle 16. It will be understood by a person skilled in the art that particulate matter to be coated may be introduced into the coating chamber from an appropriate port in the fluid bed bowl 11. A cylindrical blowback section 20 (Fig. 1) is mounted on top of the fluid bed bowl 11 and communicates in a known manner with an appropriate exhaust system, which draws air through the inlet plenum 14 into the fluid bed bowl 11, and from the fluid bed bowl 11 through a filter assembly 21, interposed between the blowback section 20 and the fluid bed bowl 11 to an exhaust plenum.

The orifice plate 15 includes an inner annular array of orifices 25 for communicating air from the inlet plenum 14 upwardly through the separator in immediately surrounding relation to a discharge end of the nozzle 16 and smaller diameter orifices 26 radially outwardly of the orifices 25 for communicating air upwardly into the coating chamber 12 outwardly of the cylindrical separator 19. The inner array of orifices 25, being larger in size than the outer orifices 26, will allow a higher volume and velocity of air from the inlet plenum 14 through the orifice plate 15 upwardly into the coating chamber 12, referred to as upbed air, for pneumatically transporting the particulate material upwardly past the spray nozzle 16 in an upbed region 28 (Fig. 1). The smaller sized orifices 26, radially outwardly of the orifices 25, allow sufficient airflow, referred to as downbed airflow, to penetrate the particulate matter in a downbed region 29 of the coating chamber 12 for maintaining the particulate matter in the downbed region in a near weightless suspension. This air causes the particulate matter in the downbed region 29 to behave somewhat like a fluid and travel downwardly in the downbed region 29 and horizontally though a transition gap 30 between the cylindrical separator 19 and the orifice plate 15 for redirection upwardly into the upbed region 28. The orifice plate 15 in this case includes an outermost annular array of orifices 27, larger than the orifices 26, for directing an outer annular airflow that prevents accumulation of particulate matter on the side wall of the bowl 11 in the down bed region.

As the particles rise upwardly in the high velocity upbed airstream, they contact droplets of coating liquid directed upwardly by the spray nozzle 16 and become coated before slowing down by the influence of gravity. The relatively high velocity upbed air stream forces the particles radially outwardly of the upbed region, and once away from the upstream lift provided by the upbed airstream, the particles fall within the bowl to the downbed region 29, eventually reaching the orifice plate 15 for recirculation into the upbed region 28.

To effect good coating of the particles, the coating fluid must be atomized into very fine liquid particles for direction into the upbed region 28, and for this purpose, pressurized air assisted spray nozzles commonly have been employed. As indicated above, however, the energy of the pressurized air directed to the spray nozzles tends to propel the liquid particles rapidly through the upbed region preventing effective coating of the particulate matter. Furthermore, the velocity can cause particles to become imbedded in the overhead filter, which impedes the filtering process and requires frequent cleaning.

In accordance with the present invention, the spray nozzle 16 ultrasonically atomizes the coating liquid into a very fine liquid particle discharge and is operable for controlling the spray discharge in a manner that enhances more effective and efficient coating of the particulate matter, and without clogging of the filter system. More particularly, the spray nozzle 16 atomizes the coating liquid without traditional pressurized air atomization and directs the liquid particles in a controlled fashion for enhanced interaction with the particulate matter in the upbed region of the coating chamber.

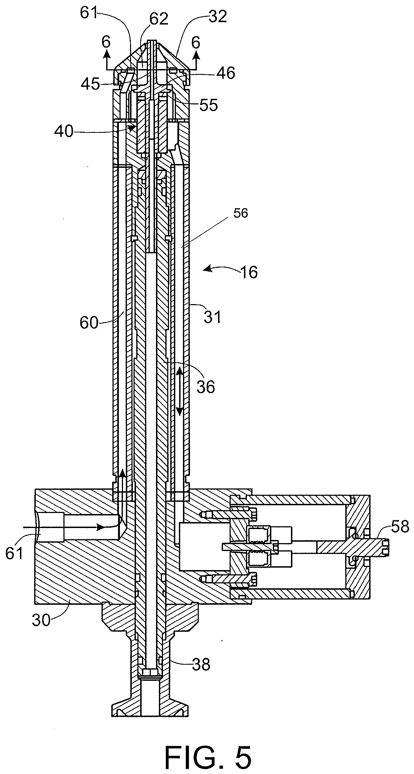

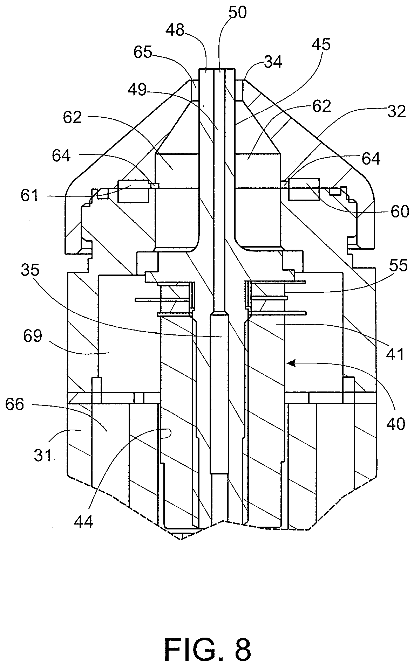

The illustrated ultrasonic nozzle 16, as best depicted in Figs. 5-8, comprises an inlet body section 30 disposed below the air inlet plenum 14 and an outer cylindrical housing 31 extending through the inlet plenum 14 to the orifice plate 15. The nozzle 16 has an aircap 32 threadedly mounted on a downstream end of the cylindrical housing 31 in a lower end of the coating chamber 12. The aircap 32 in this case has a frustoconical or pyramid shape that terminates in a forward most planal apex 34 perpendicular to a central axis 35 of the spray nozzle 16 (Fig. 8). A coating fluid supply tube 36, having an inlet fitting 38 for coupling to a suitable liquid coating supply, extends through the inlet body section 30 and the cylindrical housing 31 along the central axis 35.

For ultrasonically atomizing liquid directed through the liquid inlet tube 36, the nozzle 16 includes an ultrasonic atomizer 40, which can be made of a suitable material such as titanium, disposed adjacent downstream end of the spray nozzle 16. The ultrasonic atomizer 40 in this case includes an ultrasonic cylindrical driver 41 supported within an internal cylindrical cavity 44 in a downstream end of the cylindrical housing 31 and a rod like cannular atomizer stem 45 having an enlarged base 46 disposed in axial spaced relation to driver 41. At an axially forward tip or end, the atomizer stem 45 terminates in an atomizing surface 48, and the cannular atomizer stem 45 has a central liquid passage 49 that communicates with the liquid supply tube 36 through the driver 41 and has a liquid exit orifice 50 in the atomizing surface 48 (Fig. 8).

To generate ultrasonic vibrations of the atomizing surface 48, the ultrasonic driver 41 includes a plurality of stacked piezoelectric transducer discs 55. In the illustrating embodiment, two peizoelectric transducer discs 55 are provided which are electrically coupled to an appropriate electronic generator via an electrical line in a raceway passage 56 the cylindrical body section 31 and to an electrical communication port 58 in the inlet body section 30. As will be understood by one skilled in the art, the transducer discs 55 can be electrically coupled so that each disc 55 has an opposite or reverse polarity of an immediate adjacent disc. When electrical charge is coupled to the stack of piezoelectric discs 55, the discs 55 expand and contract against each other thereby causing the ultrasonic driver 41 to vibrate. The high frequency vibrations are transferred to the atomizing surface 48 via the atomizer stem 45, causing liquid present at the atomizing surface 48 to discharge in a cloud of extremely fine droplets or particles.

In carrying out the invention, the spray nozzle 16 is operable for forming the cloud of fine ultrasonically atomized liquid droplets into a well defined and controlled pattern for optimum interaction and coating of the particulate matter in the upbed region 29 of the coating chamber12. To this end, the spray nozzle 16 is configured to communicate pressurized gas about the atomizing surface 48 in a manner that propels the atomized droplet cloud forwardly of the atomizing surface 48 in a controlled generally conical controlled pattern within the upbed region 28 for enhanced interaction with the circulating particulate matter within the upbed region 28. In the illustrated embodiment, the cylindrical nozzle body 31 is formed with a shaping air passage way 60 that communicates between a pressurized air inlet 61 in the inlet body section 30 to an annular manifold air chamber 61 about the atomizing stem 45 (Fig. 8). In the illustrated embodiment, the annular air manifold chamber 61 is defined between the aircap 32 and a downstream end face of the nozzle body 31.

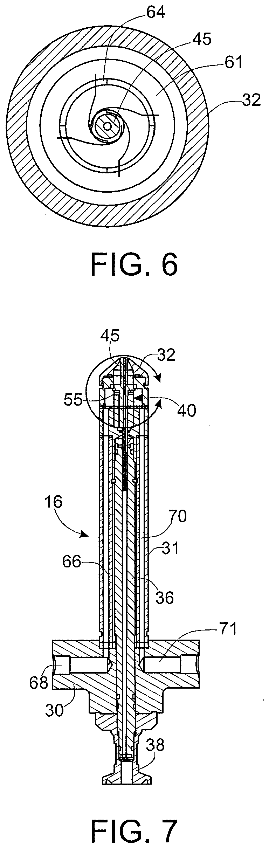

In further keeping with this embodiment, pressurized air communicates from the annular manifold chamber 60 into a hollow swirl chamber 62 about the atomizer stem 45 in a manner to create a tangential air flow within the swirl chamber 62 and through an annular air discharge orifice 65 between a central opening in the aircap 32 and the atomizer stem 45. In the illustrated embodiment, a plurality of circumferentially spaced passages 64 communicate between the manifold air chamber 60 and the swirl chamber 62 for creating a slight swirling action of pressurized air within the swirl chamber 62. The circumferentially spaced passageways 64 in this case are defined in the aircap 32 and are in radially offset relation to the atomizer stem 45, as shown in Fig. 6, such that the discharging airstreams are directed tangentially about of the atomizer stem 45. The tangentially directed air discharging from the annular air discharge orifice 65 surrounds the ultrasonically created cloud of liquid coating particles for controlling the forwardly directed pattern for interaction with surrounding upwardly moving particulate matter in the upbed region 28 of the coating chamber.

In keeping with a further aspect of the illustrated embodiment, for preventing overheating of the vibrating piezoelectric discs 55, the nozzle body 31 is formed with a cooling air passageway 66 which extends between a cooling air inlet 68 in the inlet body section 30 and an annular cavity 69 surrounding the discs 55 (Fig. 8). For facilitating circulation of cooling air about the discs 55, the nozzle body 31 is formed with a cooling air return passage 70 through an opposite side cylindrical body 31 for communicating with an outlet port 71. It will be seen that cooling air may be continually circulated through the cooling air passage 66, annular passage 68 and outlet port 71 for preventing overheating of the vibrating piezoelectric discs 55 during operation of the ultrasonic spray nozzle 16.

From the foregoing, it can be seen that the fluidized bed coating system of the present invention is adapted for more efficient and effective coating of particulate matter with very finely atomized coating fluid. The cloud of finely atomized coating fluid is controlled in a manner that facilitates complete interaction and coating of the particulate matter, without traditional air atomization of the coating fluid, and with lesser necessity for cleaning of the filter system.

It will be understated that the use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (e.g., "such as") provided herein, is intended merely to better illuminate the invention and does not pose a limitation on the scope of the invention.

A preferred embodiment of the invention is described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Moreover, any combination of the above-desired elements in all possible variations thereof is encompassed by the invention unless otherwise indicated herein or otherwise clearly contradicted by context.

## Claims

1. A fluidized bed coating apparatus (10) for coating liquid onto the surfaces of particles comprising:
a vessel (11) that defines a coating chamber (12) for receiving particles to be coated;
a processing air inlet (14, 15) for communicating processing air into an underside of said chamber (12);
a liquid spray nozzle (16) projecting upwardly toward said chamber (12) from an underside thereof for spraying coating liquid upwardly into said chamber (12);
a hollow separator (19) disposed in upstanding relation relative to a discharge end of said spray nozzle (16) into which a coating liquid sprayed from said spray nozzle (16) is directed;
said processing air (14, 15) inlet being operable for directing an upward air flow such that the particles to be coated are circulated upwardly through said separator (19) to an upbed region (28) of said coating chamber (12) and then downwardly through an downbed region (29) of the coating chamber (12) outwardly of said separator (19) for return into and through said separator (19); **characterized by**
said spray nozzle (16) having an ultrasonic driver (41) and a cannular atomizing stem extending from said ultrasonic driver (41), said stem (45) terminating in a atomizing surface (48) and having a coating liquid flow passage (49) extending along an axis of the stem (45) for directing liquid to said atomizing surface (48) such that coating liquid directed through said liquid flow passage (49) onto said atomizing surface (48) is ultrasonically atomized into a fine liquid particle cloud for direction and passage through said separator (19) into said upbed region (28) of the coating chamber (12).

2. The fluidized bed coating apparatus of claim 1 in which said spray nozzle (16) includes a nozzle body (31) having a forming air inlet (61), an air cap (32) mounted at a downstream end of said nozzle body (31) defining an air chamber about said atomizing stem (45) in fluid communication with said forming air inlet (61), said atomizing stem (45) extending through said air chamber such that said air chamber extends annularly about said atomizing stem (45), and said air cap (32) and atomizing stem (45) defining a forming air discharge orifice (65) communicating with said air chamber from which an air stream is emitted for propelling the finely atomized liquid particle cloud through said separator (19).

3. The fluidized bed coating apparatus of claim 2 in which said air cap (32) is configured for directing pressurized air into said air chamber in a rotary swirling direction around said air chamber and for direction from said forming air discharge orifice (65) in a manner for forming the ultrasonically atomized fine liquid particle cloud into a cone shaped spray pattern and propelling the liquid particles though said separator (19).

4. The fluidized bed coating apparatus of claim 2 in which said ultrasonic driver (41) is electrically activated to vibrate said atomizing surface (48) for atomizing liquid directed onto the atomizing surface (48) into a cloud of fine liquid particles proximate the atomizing surface (48).

5. The fluidized bed coating apparatus of claim 2 including an orifice plate (15) disposed between said processing air inlet (14) and a lower end of said coating chamber (12), said orifice plate (15) being formed with an inner array of orifices (25) for communicating a relatively high volume of air upwardly through said separator (19) and a second array of orifices (26) outwardly of said separator (19) for directing a relatively lower pressure air flow about an outer perimeter of said separator (19).

6. The fluidized bed coating apparatus of claim 5 in which the orifices (25) of said inner array are sized larger than the orifices (26) of said second array.

7. The fluidized bed coating apparatus of claim 5 in which said spray nozzle (16) is positioned in aligned relation to a central opening (18) in said orifice plate (16) with said air cap projecting outwardly of said central opening (18).

8. The fluidized bed coating apparatus of claim 7 in which said air cap (32) has a frustoconical end protruding through said central opening (18).

9. The fluidized bed coating apparatus of claim 5 in which said orifice plate (15) includes a third outermost annular array of orifices (27) larger in size than the orifices (26) of said second array for directing an outer annular air flow into said chamber (12) for preventing accumulation of coated particles on a side wall of said vessel (11).

10. The fluidized bed coating apparatus of claim 4 in which said nozzle body (31) is formed with an annular cavity (69) surrounding said ultrasonic driver (41), said nozzle body (31) having a cooling air inlet (68) and a cooling air passageway (66) communicating between said cooling air inlet (68) and said annular cavity (69) for directing cooling air about said ultrasonic driver (41) during operation of said spray nozzle (16).

11. The fluidized bed coating apparatus of claim 10 in which said nozzle body (31) includes a return air passage (70) communicating with said annular cavity (69) for communicating air from said annular cavity (69) to an outlet port (71).

## Patentansprüche

1. Wirbelschicht-Beschichtungsvorrichtung (10) zum Beschichten der Oberfläche von Partikeln mit Flüssigkeit, umfassend:
ein Gefäß (11), das eine Beschichtungskammer (12) zum Aufnehmen von zu beschichtenden Partikeln definiert;
einen Prozesslufteinlass (14, 15) zum Zuführen von Prozessluft in eine Unterseite der Kammer (12);
eine Flüssigkeitssprühdüse (16), die von der Unterseite der Kammer (12) zu dieser nach oben ragt, um Beschichtungsflüssigkeit nach oben in die Kammer (12) zu sprühen;
einen hohlen Separator (19), der relativ zu dem Ausstoßende der Sprühdüse (16) aufrecht stehend angeordnet ist, in den eine aus der Sprühdüse (16) gesprühte Beschichtungsflüssigkeit gerichtet ist;
wobei der Prozesslufteinlass (14, 15) funktionsfähig ist, einen Luftstrom so nach oben zu leiten, dass die zu beschichtenden Partikel nach oben durch den Separator in einen Oberbettbereich (28) der Beschichtungskammer (12) und dann durch einen Unterbettbereich (29) der Beschichtungskammer (12) außerhalb des Separators (19) nach unten zur Rückführung in und durch den Separator (19) zirkuliert werden; **dadurch gekennzeichnet, dass**
die Sprühdüse (16) einen Ultraschalltreiber (41) und einen kanalförmigen Zerstäubungsschaft, der von dem Ultraschalltreiber (41) weg verläuft, aufweist, wobei der Schaft (45) an einer Zerstäubungsfläche (48) endet und einen Beschichtungsflüssigkeitsdurchgang (49) aufweist, der entlang der Achse des Schafts (45) verläuft, um Flüssigkeit zu der Zerstäubungsfläche (48) zu leiten, so dass Beschichtungsflüssigkeit, die durch den Flüssigkeitsdurchgang (49) auf die Zerstäubungsfläche (48) geleitet wird, durch Ultraschall zu einer Wolke aus feinen Flüssigkeitspartikeln zerstäubt wird, um zu dem und durch den Separator (19) in den Oberbettbereich (28) der Beschichtungskammer (12) geleitet zu werden.

2. Wirbelschicht-Beschichtungsvorrichtung gemäß Anspruch 1, wobei die Sprühdüse (16) einen Düsenkörper (31) mit einem Formlufteinlass (61) und eine Luftkappe (32), die an einem stromabwärtigen Ende des Düsenkörpers (31) angebracht ist und eine Luftkammer um den Zerstäubungsschaft (45) definiert, in Fluidverbindung mit dem Formlufteinlass (61) aufweist, wobei der Zerstäubungsschaft (45) so durch die Luftkammer verläuft, dass die Luftkammer ringförmig um den Zerstäubungsschaft (45) verläuft, und die Luftkappe (32) und der Zerstäubungsschaft (45) eine Formluftausstoßöffnung (65) definieren, die mit der Luftkammer verbunden ist und aus der ein Luftstrom zum Treiben der Wolke von fein verteilten Flüssigkeitspartikeln durch den Separator (19) ausgestoßen wird.

3. Wirbelschicht-Beschichtungsvorrichtung gemäß Anspruch 2, wobei die Luftkappe (32) dafür gestaltet ist, Druckluft in einer um die Luftkammer rotierenden Wirbelrichtung in die Luftkammer zu leiten und so aus der Formluftausstoßöffnung (65) zu leiten, dass die ultraschallzerstäubte Wolke von feinen Flüssigkeitspartikeln eine kegelförmige Sprühstruktur bildet und die Flüssigkeitspartikel durch den Separator (19) getrieben werden.

4. Wirbelschicht-Beschichtungsvorrichtung gemäß Anspruch 2, wobei der Ultraschalltreiber (41) elektrisch aktiviert wird, um die Zerstäubungsfläche (48) schwingen zu lassen, um auf die Zerstäubungsfläche (48) geleitete Flüssigkeit zu einer Wolke von feinen Flüssigkeitspartikeln nahe der Zerstäubungsfläche (48) zu zerstäuben.

5. Wirbelschicht-Beschichtungsvorrichtung gemäß Anspruch 2, umfassend eine Lochplatte (15), die zwischen dem Prozesslufteinlass (14) und dem unteren Ende der Beschichtungskammer (12) angeordnet ist, wobei die Lochplatte (15) mit einer inneren Anordnung von Öffnungen (25) gestaltet ist, um ein vergleichsweise großes Volumen an Luft nach oben durch den Separator (19) zu leiten, und eine zweite Anordnung von Öffnungen (26) außerhalb des Separators (19), um einen Luftstrom mit vergleichsweise niedrigerem Druck um einen Außenumfang des Separators (19) zu leiten.

6. Wirbelschicht-Beschichtungsvorrichtung gemäß Anspruch 5, wobei die Öffnungen (25) der inneren Anordnung größer als die Öffnungen (26) der zweiten Anordnung sind.

7. Wirbelschicht-Beschichtungsvorrichtung gemäß Anspruch 5, wobei die Sprühdüse (16) mit einer mittleren Öffnung (18) der Lochplatte (16) fluchtet, wobei die Luftkappe von der mittleren Öffnung (18) nach außen ragt.

8. Wirbelschicht-Beschichtungsvorrichtung gemäß Anspruch 7, wobei die Luftkappe (32) ein kegelstumpfförmiges Ende aufweist, das durch die mittlere Öffnung (18) ragt.

9. Wirbelschicht-Beschichtungsvorrichtung gemäß Anspruch 5, wobei die Lochplatte (15) eine dritte, am weitesten außen liegende ringförmige Anordnung von Öffnungen (27) aufweist, die größer als die Öffnungen (26) der zweiten Anordnung sind, um einen äußeren ringförmigen Luftstrom in die Kammer (12) zu leiten, um Akkumulation von beschichteten Partikeln an der Seitenwand des Gefäßes (11) zu verhindern.

10. Wirbelschicht-Beschichtungsvorrichtung gemäß Anspruch 4, wobei der Düsenkörper (31) mit einem ringförmigen Hohlraum (69) gestaltet ist, der den Ultraschalltreiber (41) umgibt, wobei der Düsenkörper (31) einen Kühllufteinlass (68) und einen Kühlluftdurchgang (66), der mit dem Kühllufteinlass (68) und dem ringförmigen Hohlraum (69) verbunden ist, aufweist, um während des Betriebs der Sprühdüse (16) Kühlluft um den Ultraschalltreiber (41) zu leiten.

11. Wirbelschicht-Beschichtungsvorrichtung gemäß Anspruch 10, wobei der Düsenkörper (31) einen Abluftdurchlass (70) aufweist, der mit dem ringförmigen Hohlraum (69) verbunden ist, um Luft aus dem ringförmigen Hohlraum (69) zu einer Auslassöffnung (71) zu leiten.

## Revendications

1. Appareil de revêtement à lit fluidisé (10) pour appliquer un liquide sur les surfaces de particules, comprenant :
un récipient (11) qui définit une chambre de revêtement (12) pour recevoir des particules qui doivent être recouvertes ;
un orifice d'entrée d'air de traitement (14, 15) pour communiquer de l'air de traitement dans une partie inférieure de ladite chambre (12) ;
une buse de pulvérisation de liquide (16) faisant saillie vers le haut vers ladite chambre (12) à partir d'une partie inférieure de cette dernière pour pulvériser un liquide de revêtement vers le haut dans ladite chambre (12) ;
un séparateur creux (19) disposez dans une relation verticale par rapport à une extrémité de décharge de ladite buse de pulvérisation (16) vers laquelle un liquide de revêtement pulvérisé depuis ladite buse de pulvérisation (16) est dirigé ;
ledit orifice d'entrée d'air de traitement (14, 15) étant destiné à diriger un flux d'air vers le haut de telle sorte que les particules qui doivent être recouvertes, soient propagées vers le haut à travers ledit séparateur (19) vers une région supérieure (28) de ladite chambre de revêtement (12) et, ensuite, vers le bas à travers une région inférieure (29) de la chambre de revêtement (12) à l'extérieur dudit séparateur (19) pour un retour dans ledit séparateur (19) et à travers ce dernier ; **caractérisé par**
ladite buse de pulvérisation (16) ayant un dispositif de commande à ultrasons (41) et une tige de pulvérisation en forme de canule s'étendant depuis ledit dispositif de commande à ultrasons (41), ladite tige (45) se terminant dans une surface de pulvérisation (48) et ayant un passage d'écoulement de liquide de revêtement (49) s'étendant le long d'un axe de la tige (45) pour diriger un liquide vers ladite surface de pulvérisation (48) de telle sorte qu'un liquide de revêtement dirigé à travers ledit passage d'écoulement de liquide (49) sur ladite surface de pulvérisation (48) soit pulvérisé par ultrasons sous la forme d'un nuage de fines particules liquides pour une direction et un passage à travers ledit séparateur (19) dans ladite région supérieure (28) de la chambre de revêtement (12).

2. Appareil de revêtement à lit fluidisé selon la revendication 1, dans lequel ladite buse de pulvérisation (16) comprend un corps de buse (31) ayant un orifice d'entrée d'air de formation (61), un capuchon d'entrée d'air (32) monté au niveau d'une extrémité avale dudit corps de buse (31) définissant une chambre d'air autour de ladite tige de pulvérisation (45) en communication fluidique avec ledit orifice d'entrée d'air de formation (61), ladite tige de pulvérisation (45) s'étendant à travers ladite chambre d'air de telle sorte que ladite chambre d'air s'étende de façon annulaire autour de ladite tige de pulvérisation (45) et ledit capuchon d'entrée d'air (32) et ladite tige de pulvérisation (45) définissant un orifice d'évacuation d'air de formation (65) communiquant avec ladite chambre d'air à partir de laquelle un courant d'air est émis pour propulser le nuage de particules liquides pulvérisées finement à travers ledit séparateur (19).

3. Appareil de revêtement à lit fluidisé selon la revendication 2, dans lequel ledit capuchon d'entrée d'air (32) est configuré pour diriger de l'air sous pression dans ladite chambre d'air dans une direction de tourbillonnement rotatif autour de ladite chambre d'air et pour une direction à partir dudit orifice d'évacuation d'air de formation (65) de manière à former le nuage de fines particules liquides pulvérisées par ultrasons selon un motif de pulvérisation en forme de cône et à propulser les particules liquides à travers ledit séparateur (19).

4. Appareil de revêtement à lit fluidisé selon la revendication 2, dans lequel ledit dispositif de commande à ultrasons (41) est activé électriquement pour faire vibrer ladite surface de pulvérisation (48) pour pulvériser un liquide dirigé sur la surface de pulvérisation (48) sous la forme d'un nuage de fines particules liquides à proximité de la surface de pulvérisation (48).

5. Appareil de revêtement à lit fluidisé selon la revendication 2, comprenant une plaque à orifices (15) disposée entre ledit orifice d'entrée d'air de traitement (14) et une extrémité inférieure de ladite chambre de revêtement (12), ladite plaque à orifices (15) étant formée avec un réseau interne d'orifices (25) pour communiquer un volume d'air relativement grand vers le haut à travers ledit séparateur (19) et un deuxième réseau d'orifices (26) vers l'extérieur dudit séparateur (19) pour diriger un flux d'air de pression relativement plus faible autour d'un périmètre externe dudit séparateur (19).

6. Appareil de revêtement à lit fluidisé selon la revendication 5, dans lequel les orifices (25) dudit réseau interne sont dimensionnés de sorte à être plus importants que les orifices (26) dudit deuxième réseau.

7. Appareil de revêtement à lit fluidisé selon la revendication 5, dans lequel ladite buse de pulvérisation (16) est positionnée selon une relation alignée par rapport à une ouverture centrale (18) dans ladite plaque à orifices (16), ledit capuchon d'entrée d'air faisant saillie vers l'extérieur de ladite ouverture centrale (18).

8. Appareil de revêtement à lit fluidisé selon la revendication 7, dans lequel ledit capuchon d'entrée d'air (32) comporte une extrémité frusto-conique faisant saillie à travers ladite ouverture centrale (18) .

9. Appareil de revêtement à lit fluidisé selon la revendication 5, dans lequel ladite plaque à orifice comprend un troisième réseau annulaire d'orifices (27) situé le plus à l'extérieur dont la taille est plus importante que celle des orifices (26) du deuxième réseau pour diriger un flux d'air annulaire externe dans ladite chambre (12) pour empêcher une accumulation de particules recouvertes sur une paroi latérale dudit récipient (11).

10. Appareil de revêtement à lit fluidisé selon la revendication 4, dans lequel ledit corps de buse (31) est formé avec une cavité annulaire (69) entourant ledit dispositif de commande à ultrasons (41), ledit corps de buse (31) ayant un orifice d'entrée d'air de refroidissement (68) et un passage d'air de refroidissement (66) communiquant entre ledit orifice d'entrée d'air de refroidissement (68) et ladite cavité annulaire (69) pour diriger de l'air de refroidissement autour dudit dispositif de commande à ultrasons (41) pendant le fonctionnement de ladite buse de pulvérisation (16).

11. Appareil de revêtement à lit fluidisé selon la revendication 10, dans lequel ledit corps de buse (31) comprend un passage d'air de retour (70) communiquant avec ladite cavité annulaire (69) pour communiquer de l'air depuis ladite cavité annulaire (69) jusqu'à un orifice de sortie (71).
